(19) Europäisches Patentamt / European Patent Office / Office européen des brevets

(11) **EP 1 759 989 B1**

(12) **FASCICULE DE BREVET EUROPEEN**

(45) Date de publication et mention
de la délivrance du brevet:
**30.09.2009 Bulletin 2009/40**

(51) Int Cl.:
*B64C 25/44* *(2006.01)*  *B60T 13/74* *(2006.01)*

(21) Numéro de dépôt: **06291295.1**

(22) Date de dépôt: **10.08.2006**

(54) **Procédé de gestion d'un actionneur de frein électromécanique, notamment pour aéronef**

Verfahren zum Betreiben eines elektromechanischen Bremsaktuators, insbesondere für Flugzeuge

Method for operating an electromechanical brake actuator, in particular for aircraft

(84) Etats contractants désignés:
**DE ES FR GB IT**

(30) Priorité: **02.09.2005 FR 0508994**

(43) Date de publication de la demande:
**07.03.2007 Bulletin 2007/10**

(73) Titulaire: **MESSIER-BUGATTI**
**78140 Vélizy Villacoublay (FR)**

(72) Inventeurs:
• **Thibault, Julien**
**91120 Palaiseau (FR)**
• **Nierlich, Florent**
**92400 Courbevoie (FR)**

(74) Mandataire: **Jaunez, Xavier et al**
**Cabinet Boettcher,**
**22, rue du Général Foy**
**75008 Paris (FR)**

(56) Documents cités:
**US-A1- 2005 039 990**

## Description

L'invention concerne un procédé de gestion d'un actionneur de frein électromécanique, notamment pour aéronef.

ARRIERE-PLAN DE L'INVENTION

On connaît des procédés de gestion d'un actionneur de frein électromécanique comportant un moteur électrique adapté à déplacer un poussoir en regard d'une pile de disques pour appliquer sélectivement un effort de freinage sur la pile de disques.

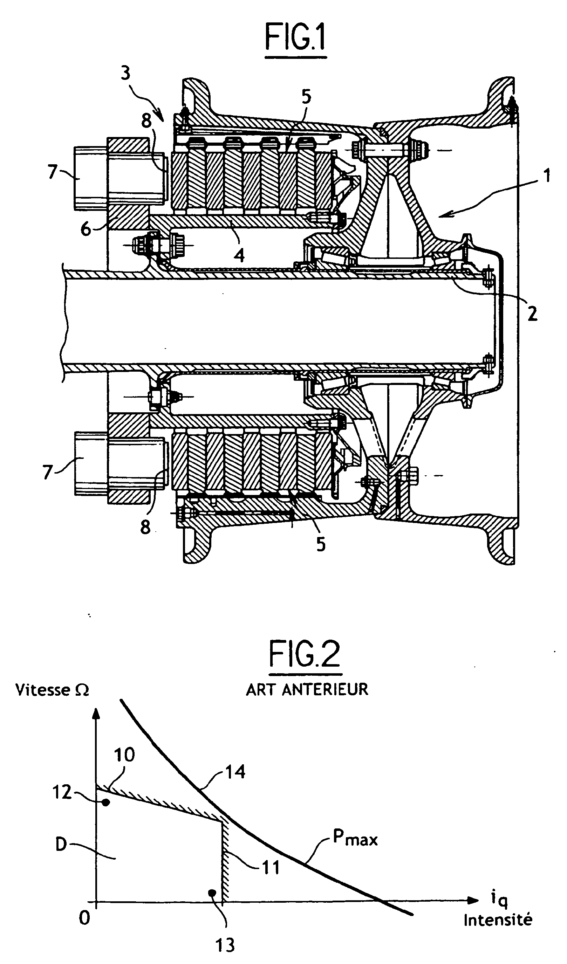

A titre d'illustration d'un tel frein, la figure 1 représente, en coupe, un frein électromécanique 3 d'aéronef monté sur un essieu 2 d'atterrisseur d'aéronef qui porte une jante 1 (destinée à recevoir un pneumatique non représenté). Un tel frein 3 comporte un tube de torsion 4 fixé à l'essieu 2 ainsi qu'une pile de disques 5 qui s'étend entre le tube de torsion 4 et la jante 1. La pile de disques 5 comporte des premiers disques (appelés rotors) solidaires en rotation de la jante 1 et des deuxièmes disques (appelés stators) disposés alternativement avec les premiers disques en étant solidaires en rotation du tube de torsion 4 de sorte qu'ils ne tournent pas avec la jante. En regard de la pile de disques s'étend une couronne 6 solidaire du tube de torsion 4 qui porte des actionneurs électromécaniques 7 renfermant chacun un moteur électrique (non visible) adapté à déplacer un poussoir 8 en regard de la pile de disques 5 pour appliquer sélectivement sur celle-ci un effort de freinage. Un exemple d'un tel actionneur peut se trouver par exemple dans le document US 2005/039990 A1.

Comme illustré à la figure 2 qui représente le domaine de fonctionnement du moteur électrique de l'un des actionneurs 7 dans le plan intensité/vitesse, ledit domaine de fonctionnement D comporte de façon connue en soi une frontière délimitée d'une part par une première droite 10 (inclinée vers le bas) dont la pente dépend des caractéristiques et dimensions du moteur et la hauteur est fixée par le choix d'une tension d'alimentation du moteur, et d'autre part par une seconde droite 11 (verticale) définie par une intensité maximale que l'on désire ne pas dépasser lors du fonctionnement du moteur, notamment pour protéger les composants de puissance associés au moteur.

Les points de fonctionnement typiques des actionneurs de frein se situent d'une part au voisinage de l'intersection de l'axe de vitesse et de la première droite 10, comme le point de fonctionnement 12, ce qui correspond à une phase d'approche du poussoir 8 vers les disques 5 à vitesse rapide, et, d'autre part, au voisinage de l'intersection de l'axe d'intensité avec la seconde droite 11, comme le point de fonctionnement 13, ce qui correspond à une phase d'application d'effort par le poussoir 8 sur les disques 5.

En général, sur les aéronefs, la puissance disponible est limitée et il importe que les actionneurs ne puissent appeler une puissance supérieure à la puissance maximale autorisée $P_{max}$, afin d'éviter de déclencher des dispositifs de protection électrique de l'aéronef, de type disjoncteur.

Cette contrainte conduit donc à définir un domaine de fonctionnement D qui, dans le plan intensité/vitesse, s'étend entièrement sous la courbe d'isopuissance 14 correspondant à la puissance maximale autorisée $P_{max}$.

Cette limitation conduit à une sous-utilisation des performances de l'actionneur.

OBJET DE L'INVENTION

L'invention a pour objet un procédé de gestion permettant d'augmenter les performance des actionneurs d'un frein électromécanique, tout en faisant en sorte que la puissance appelée n'excède pas la puissance maximale autorisée.

BREVE DESCRIPTION DE L'INVENTION

En vue de la réalisation de ce but, on propose un procédé de gestion d'un actionneur de frein électromécanique comportant un moteur électrique adapté à déplacer un poussoir en regard d'une pile de disques pour appliquer sélectivement un effort de freinage sur la pile de disques, le procédé comportant l'étape de faire fonctionner le moteur électrique dans un domaine de fonctionnement donné du plan intensité/vitesse, le domaine de fonctionnement étant choisi selon l'invention pour présenter une frontière ayant une portion qui s'étend sensiblement selon une courbe d'isopuissance tracée dans le plan intensité/vitesse.

En choisissant comme courbe d'isopuissance une courbe correspondant à la puissance maximale autorisée $P_{max}$ (ou une puissance légèrement inférieure), le domaine ainsi défini permet un fonctionnement du moteur selon des points de fonctionnement correspondant à des vitesses ou des intensités plus élevées que dans l'art antérieur, tout en évitant que le moteur n'appelle une puissance supérieure à la puissance maximale autorisée.

BREVE DESCRIPTION DES DESSINS

L'invention sera mieux comprise à la lumière de la description qui suit en référence aux figures des dessins annexés parmi lesquelles outre les figure 1 et 2 déjà présentées :

- la figure 3 est une figure analogue à la figure 2 montrant la mise en oeuvre de l'invention ;
- la figure 4 est un schéma bloc illustrant l'asservissement du moteur électrique de l'un des actionneurs selon un mode particulier de mise en oeuvre de l'invention comportant une saturation de position, une saturation de vitesse et une saturation de courant;

- la figure 5 est une vue de détail du schéma bloc de la figure 4 illustrant la saturation de vitesse;
- la figure 6 est une vue de détail du schéma bloc de la figure 4 illustrant la saturation de courant;
- la figure 7 est un diagramme illustrant les évolutions d'un seuil intervenant dans les saturations illustrées aux figures 5 et 10;
- la figure 8 est un diagramme illustrant les évolutions d'un coefficient intervenant dans les saturations illustrées aux figures 5,6 et 10;
- la figure 9 est un diagramme illustrant les évolutions d'un coefficient intervenant dans la saturation illustrée à la figure 6;
- la figure 10 est une vue de détail du schéma bloc de la figure 4 illustrant la saturation de position.

## DESCRIPTION DETAILLEE DE L'INVENTION

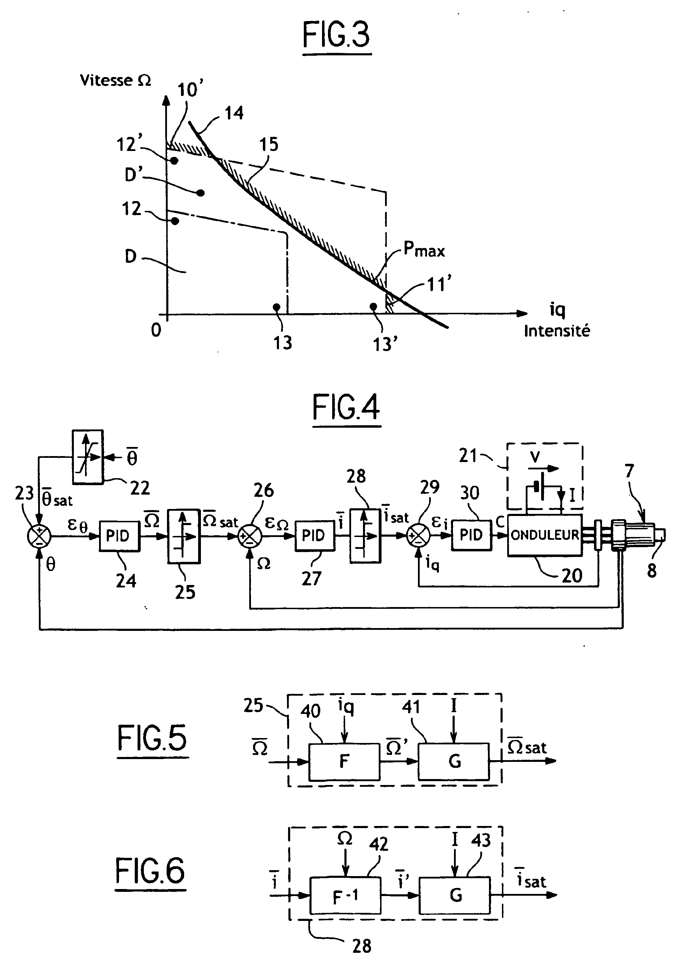

En référence à la figure 3, l'invention consiste à faire fonctionner l'actionneur électromécanique 7 dans un domaine de fonctionnement D' plus grand que le domaine D (illustré en traits mixtes). Le domaine D' est limité par une première droite 10', définie par une tension d'alimentation du moteur plus importante que celle qui définit la première droite 10 de la figure 2, et une seconde droite 11' correspondant à un courant maximal plus important que celui qui définit la seconde droite 11 de la figure 2. Par ailleurs, et selon l'invention, le domaine D' est délimité par une portion de frontière 15 qui s'étend selon la courbe d'isopuissance 14 correspondant à la puissance $P_{max}$ (également visible à la figure 2).

Le nouveau domaine de fonctionnement D' permet le fonctionnement de l'actionneur 7 selon des points de fonctionnement permettant de plus grandes performances. Ainsi, l'actionneur 7 peut fonctionner au point de fonctionnement 12' donc à une vitesse plus importante que celle associée au point de fonctionnement 12, ou encore au point de fonctionnement 13', donc à un couple plus important que celui associé au point 13. Néanmoins, le domaine D' reste entièrement sous la courbe d'isopuissance 14 correspondant à $P_{max}$ de sorte que le fonctionnement de l'actionneur dans le domaine de fonctionnement D' limite la puissance appelée par l'actionneur 7 à une puissance au plus égale à la puissance maximale $P_{max}$.

Le principe de l'invention étant exposé, un mode particulier de mise en oeuvre de l'invention est maintenant détaillé.

En référence à la figure 4, l'actionneur électromécanique 7 est de façon connue en soi alimenté par un onduleur 20 qui, génère trois courants alternatifs à destination des trois phases du moteur électrique équipant l'actionneur 7. L'onduleur 20 est alimenté par une source électrique 21 adaptée à débiter un courant I sous une tension V sensiblement constante et commandé par un asservissement qui, à partir d'une consigne de position angulaire du moteur $\overline{\theta}$ (à laquelle correspond une position du poussoir en regard de la pile de disques),

génère une commande $\underline{c}$ de l'onduleur telle que le moteur électrique de l'actionneur 7 soit commandé jusqu'à atteindre une position angulaire correspondant à la consigne de position angulaire $\overline{\theta}$

L'asservissement décrit ici comporte une boucle en position, une boucle en vitesse et une boucle en courant imbriquées les uns dans les autres.

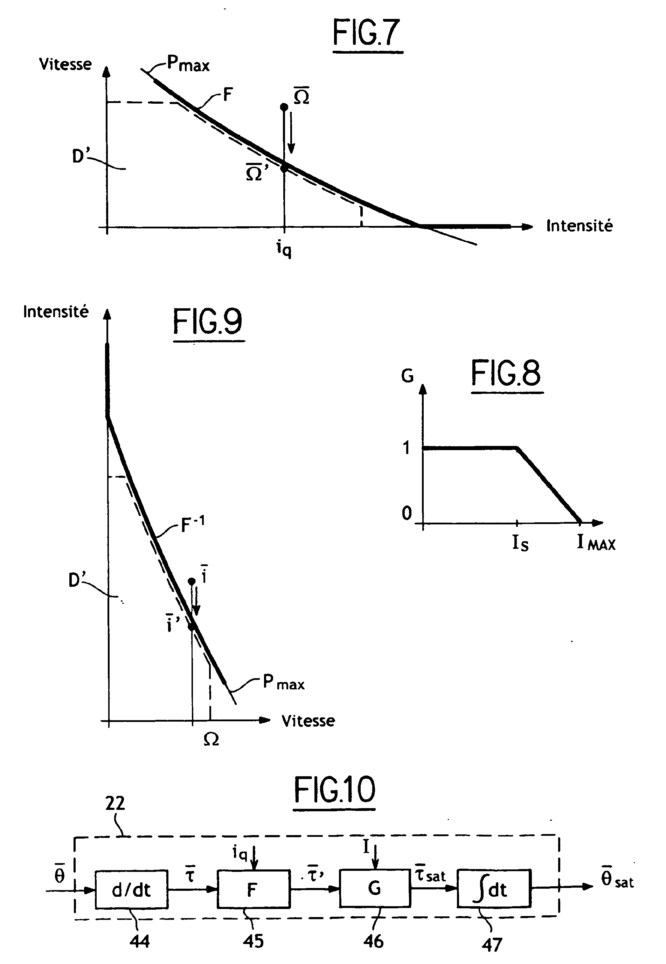

La consigne de position angulaire $\overline{\theta}$ générée par un calculateur de freinage (non illustré) est tout d'abord soumise à un saturateur de position 22 (qui sera détaillé plus loin en relation avec la figure 10) agencé pour limiter la pente maximale de la consigne de position angulaire $\overline{\theta}$ (c'est-à-dire la variation de la consigne de position angulaire $\overline{\theta}$ en fonction du temps) à une valeur maximale déterminée. Cette saturation filtre des montées brusques de la consigne de position angulaire requérant des fonctionnements à des puissances importantes.

La sortie $\overline{\theta}_{sat}$ du saturateur de position 22 forme l'entrée positive d'un sommateur 23 dont l'entrée négative est formée par une mesure $\theta$ de la position angulaire du moteur de l'actionneur 7, formant ainsi la boucle de position.

La sortie du sommateur 23, c'est-à-dire l'erreur $\varepsilon_\theta = \overline{\theta}_{sat} - \theta$, forme l'entrée d'un premier PID 24 dont la sortie est une consigne de vitesse $\overline{\Omega}$ de rotation du moteur (qui, à un coefficient près, est également une consigne de vitesse de déplacement du poussoir). La consigne de vitesse $\overline{\Omega}$ est soumise à un saturateur de vitesse 25 (qui sera détaillé plus loin en relation avec la figure 5) agencé pour limiter la consigne de vitesse $\overline{\Omega}$ de sorte que le point de fonctionnement de l'actionneur ne sorte pas du domaine D'. La sortie $\overline{\Omega}_{sat}$ du saturateur de vitesse 25 forme l'entrée positive d'un sommateur 26 dont l'entrée négative est formée par une mesure $\Omega$ de la vitesse de rotation du moteur de l'actionneur 7, formant ainsi la boucle de vitesse.

La sortie du sommateur 26, c'est-à-dire l'erreur $\varepsilon_\Omega = \overline{\Omega}_{sat} - \Omega$, forme l'entrée d'un deuxième PID 27 dont la sortie est une consigne de courant $\overline{i}$. La consigne de courant $\overline{i}$ est soumise à un saturateur de courant 28 (qui sera détaillé plus loin en relation avec la figure 6) agencé pour limiter la consigne de courant $\overline{i}$ de sorte que le point de fonctionnement de l'actionneur ne sorte pas du domaine D'. La sortie $\overline{i}_{sat}$ du saturateur de courant 28 forme l'entrée positive d'un sommateur 29 dont l'entrée négative est formée par une mesure $i_q$ du courant envoyé par l'onduleur 20 au moteur de l'actionneur 7 formant ainsi la boucle de courant. La valeur $i_q$ est estimée de façon connue en soi à partir des amplitudes instantanées des trois courants de phase générés par l'onduleur 20.

Enfin, la sortie du sommateur 29, c'est-à-dire l'erreur $\varepsilon_i = \overline{i}_{sat} - i_q$, forme l'entrée d'un troisième PID 30 dont la sortie est la commande $\underline{c}$.

En référence à la figure 5, le saturateur de vitesse 25 comporte tout d'abord un premier limiteur 40 qui limite la consigne de vitesse $\overline{\Omega}$ de sorte que le point de fonctionnement correspond à la consigne de vitesse

$(\overline{\Omega}, i_q)$ reste dans le domaine de fonctionnement D'. On définit un seuil F dépendant du courant $i_q$ selon les modalités suivantes : la puissance consommée par le moteur de l'actionneur 7 soumis à un courant $i_q$ et tournant à la vitesse $\Omega$ s'exprime comme

$$P = k_1 \cdot \Omega \cdot i_q + k_2 \cdot i_q^2 \ ,$$ où le premier terme représente la puissance mécanique développée par le moteur de l'actionneur et le deuxième terme représente les pertes par effet Joule. La courbe d'isopuissance 14 a donc pour équation $P_{\max} = k_1 \cdot \Omega \cdot i_q + k_2 \cdot i_q^2$ où $P_{\max}$ est

un paramètre fixé à priori.

Pour un courant $i_q$ donné, il suffit de limiter la consigne de vitesse $\overline{\Omega}$ au seuil F choisi comme suit:

$$F = \frac{P_{\max} - k_2 \cdot i_q^2}{k_1 \cdot i_q} \quad \text{pour} \quad i_q \leq \sqrt{P_{\max}/k_2} \ ,$$

et O sinon.

Le seuil F est tracé à la figure 7. Le seuil F suit la courbe d'isopuissance $P_{\max}$ jusqu'au point où celle-ci croise l'axe des abscisses, puis garde la valeur nulle. On voit sur la figure 7 l'effet du premier limiteur 40 qui, pour un courant $i_q$ donné, ramène la consigne de vitesse $\overline{\Omega}$ à la valeur $\overline{\Omega}'$ prise sur la courbe de seuil F, qui coïncide avec la frontière 15 du domaine D' (tracé en pointillés sur la figure 7), de sorte que le point de fonctionnement est ramené dans le domaine D'.

Cependant, en fonctionnement, il se peut que les paramètres ayant servi à déterminer le seuil F (essentiellement la constante de couple k1 et la valeur de la résistance électrique k2) varie pour diverses raisons (usure, échauffement...). Dès lors, bien que le limiteur 40 fonctionne correctement, la puissance peut, de façon accidentelle, dépasser la puissance $P_{\max}$.

Pour empêcher de tels dépassements, le saturateur de vitesse 25 comporte un limiteur de sécurité 41 qui affecte la sortie $\overline{\Omega}'$ du premier limiteur 40 d'un coefficient G dépendant du courant I d'alimentation de l'onduleur 20 selon les modalités suivantes: la puissance consommée par l'onduleur 20 vaut $P = V \cdot I$. La tension d'alimentation V étant sensiblement constante, la puissance consommée par l'onduleur 20 varie donc sensiblement comme le courant d'alimentation I. La puissance $P_{\max}$ correspond ainsi à un courant $I_{\max}$ tel que $P_{\max} = V \cdot I_{\max}$. Le coefficient G est dès lors choisi, comme illustré à la figure 8, de façon qu'il soit égal à 1 tant que le courant d'alimentation I est inférieur à un courant de seuil Is (par exemple 90% du courant $I_{\max}$), puis diminue linéairement vers 0 quand le courant d'alimentation I atteint le courant $I_{\max}$.

La sortie du saturateur de vitesse 25 est ainsi égale à $\overline{\Omega}_{sat} = G \cdot \overline{\Omega}'$. Ainsi, si courant d'alimentation I de l'onduleur 20 s'approche du courant Imax, le consigne de vitesse se voit affecté d'un coefficient diminuant vers 0, de sorte que le poussoir ralentit et la puissance appelée diminue, ce qui a pour effet d'éloigner le courant d'alimentation I du courant Imax. Ainsi, la puissance consommée ne peut dépasser la puissance maximale $P_{\max}$.

En référence à la figure 6, le saturateur de courant 28 comporte un premier limiteur 42 qui limite la consigne de courant $\overline{i}$ à un seuil $F^{-1}$ dépendant de la vitesse $\Omega$ et illustré à la figure 9, ce seuil étant ici choisi comme étant la fonction réciproque du seuil F utilisé pour le premier limiteur 40 du saturateur de vitesse 25 (graphiquement, le seuil $F^{-1}$ se déduit du seuil F la figure 7 si on prend soin d'échanger mentalement l'axe de abscisses et l'axe des ordonnées).

On voit sur la figure 9 l'effet de la saturation qui, pour une vitesse $\Omega$ donnée, ramène la consigne de courant $\overline{i}$ à la valeur $\overline{i}'$ prise sur la courbe de seuil $F^{-1}$, qui coïncide avec la frontière 15 du diagramme de fonctionnement D' (tracé en pointillés sur la figure 9), de sorte que le point de fonctionnement $(\Omega, \overline{i})$ est ramené dans le domaine D'.

Le saturateur 28 comporte également un limiteur 43 de sécurité, en tout point identique au limiteur de sécurité 41 du saturateur de vitesse 25.

Enfin, en référence à la figure 10, le saturateur de position 23 comporte tout d'abord un dérivateur 44 estimant une dérivée temporelle $\overline{\tau}$ de la consigne de position $\overline{\theta}$. Puis la dérivée temporelle $\overline{\tau}$ (qui a la dimension d'une vitesse angulaire) est soumise à un premier limiteur 45 en tout point identique au premier limiteur 40 du saturateur 25, qui fait donc appel au seuil F et qui fournit en sortie une valeur $\overline{\tau}'$. Cette valeur est soumise à un limiteur de sécurité 46 en tout point identique au limiteurs de sécurité 41 et 43 pour fournir une dérivée temporelle saturée $\overline{\tau}_{sat}$, qui est traitée par un intégrateur temporel 47 pour fournir la consigne de position saturée $\overline{\theta}_{sat}$ le point de fonctionnement $(\overline{\tau}_{sat}, i_q)$ est alors dans le domaine de fonctionnement D'.

L'invention n'est pas limitée à ce qui vient d'être décrit, mais bien au contraire englobe toute variante entrant dans le cadre défini par les revendications.

En particulier, bien que l'on ait décrit le fonctionnement de l'actionneur et la mise en ooeuvre de l'invention dans le premier quadrant du plan intensité/vitesse, il est évident que l'invention peut être étendue aux trois autres quadrants dudit plan. Ainsi, chaque quadrant présentera une portion de frontière s'étendant sensiblement selon une courbe d'isopuissance.

Bien que l'asservissement illustré ici mette en oeuvre une saturation de position, une saturation de vitesse et une saturation de courant, on pourra se contenter de mettre en oeuvre deux de ces saturations, voire une seule. Toutes ont en effet pour fonction de maintenir le point de fonctionnement de l'actionneur dans le domaine D'. Bien entendu, plus on prévoit de saturations, plus les risques de voir le point de fonctionnement franchir la frontière du domaine D' diminuent. Cependant, l'augmentation du nombre des saturations contribue à déstabiliser l'asservissement en introduisant à chaque fois des retards dans la boucle d'asservissement. Ainsi donc, le nombre de saturations utilisé résultera d'un compromis entre la diminution du risque pour le point de fonctionnement de sortir du domaine de fonctionnement D' et la stabilité de l'asservissement.

Bien que les saturateurs illustrés comprennent un premier limiteur dont le seuil est calculé au moyen de fonctions continues du courant ou de la vitesse mesurée qui donnent au domaine de fonctionnement une frontière épousant parfaitement la forme d'une courbe d'isopuissance dans le plan intensité/vitesse, on pourra construire une frontière qui n'épouse pas parfaitement la courbe d'isopuissance, par exemple au moyen d'une frontière en escaliers.

Les saturateurs pourront ne pas comporter de limiteur de sécurité, si l'on ne craint pas les dépassements accidentels et transitoires de puissance au delà de la puissance maximale autorisée. A cet égard, un moyen de diminuer le risque de tels dépassements consiste à prévoir une frontière du domaine de fonctionnement de l'actionneur qui s'étend non pas selon la courbe d'isopuissance qui correspond à la puissance maximale autorisée $P_{max}$, mais selon une courbe d'isopuissance correspondant à une valeur de puissance légèrement inférieure $\alpha.P_{max}$, où $\alpha$ est inférieur à 1 (par exemple 90%).

Bien que l'on ait illustré un asservissement en position de l'actionneur, l'invention s'applique également à un asservissement en effort.

## Revendications

1. Procédé de gestion d'un actionneur (7) de frein électromécanique comportant un moteur électrique adapté à déplacer un poussoir (8) en regard d'une pile de disques pour appliquer sélectivement un effort de freinage sur la pile de disques, le moteur électrique tournant à une vitesse de rotation ($\overline{\Omega}$) sous un courant ($i_q$) donné,
le procédé comportant l'étape de faire fonctionner l'actionneur à un point de fonctionnement défini par la vitesse de rotation du moteur ($\overline{\Omega}$) et le courant ($i_q$) qui soit contenu dans un domaine de fonctionnement (D') donné du plan intensité/vitesse;
**caractérisé en ce que** le domaine de fonctionnement (D') est choisi pour présenter une frontière (15) ayant une portion qui s'étend sensiblement selon une courbe d'isopuissance (14) tracée dans le plan intensité/vitesse.

2. Procédé selon la revendication 1, dans lequel on met en oeuvre un asservissement comportant une boucle de courant recevant une consigne de courant ($\overline{I}$), le procédé comportant l'étape de saturer la consigne de courant ($\overline{I}_{sat}$) de sorte que le point de fonctionnement correspondent à la consigne de courant

saturée ($\overline{I}_{sat}$) et à la vitesse de rotation (Q) reste dans ledit domaine de fonctionnement (D').

3. Procédé selon la revendication 1, dans lequel on met en oeuvre un asservissement comportant une boucle de vitesse recevant une consigne de vitesse ($\overline{\Omega}$), le procédé comportant l'étape de saturer la consigne de vitesse de sorte que le point de fonctionnement correspondent à la consigne de vitesse saturée ($\overline{\Omega}_{sat}$) et au courant ($i_q$) reste dans ledit domaine de fonctionnement (D').

4. Procédé selon la revendication 1, dans lequel on met en oeuvre un asservissement comportant une boucle de position recevant une consigne de position ($\overline{\theta}$), le procédé comportant l'étape de saturer la consigne de position de sorte que le point de fonctionnement correspondant à la dérivée ($\overline{\tau}_{sat}$) de la consigne de position saturée ($\overline{\theta}_{sat}$) et au courant ($i_q$) reste dans ledit domaine de fonctionnement (D').

5. Procédé selon l'une des revendications 2 à 4, dans lequel l'actionneur est alimenté par une source électrique (20), la consigne est multipliée par un coefficient G qui est nul si la puissance est égale ou supérieure à une puissance maximale autorisée ($P_{max}$).

6. Procédé selon la revendication 5, dans lequel la source électrique (20) est agencée pour débiter un courant d'alimentation (I) sous une tension (V) sensiblement constante, et dans lequel on mesure le courant d'alimentation (I) et on le compare à un courant maximal ($I_{max}$) correspondant à la puissance maximale autorisée ($P_{max}$).

## Claims

1. A method of managing an electromechanical brake actuator (7) comprising an electric motor adapted to move a pusher (8) facing a stack of disks to selectively apply a braking force to the stack of disks, the electric motor running at a speed of rotation ($\overline{\Omega}$) under a given current ($i_q$),
the method including causing the actuator to operate at an operating point defined by the speed of rotation ($\overline{\Omega}$) of the motor and its current ($i_q$), where the operating point lies within a given operating domain (D') defined in a current/speed plane;
the method being **characterized in that** the operating domain (D') is selected to present a boundary (15) that has a portion that extends substantially along a constant power curve (14) plotted in the current/speed plane.

2. A method according to claim 1, in which servo-control is used that includes a current loop receiving a current reference (i), the method including the step of saturating the current reference ($\bar{i}_{sat}$) in such a manner that the operating point corresponding to the saturated current reference ($\bar{i}_{sat}$) and to the speed of rotation ($\Omega$) remains within said operating domain (D').

3. A method according to claim 1, in which servo-control is implemented including a speed loop receiving a speed reference ($\overline{\Omega}$), the method including the step of saturating the speed reference so that the operating point corresponding to the saturated speed reference ($\Omega_{sat}$) and to the current ($i_q$) remains within said operating domain (D').

4. A method according to claim 1, in which servo-control is implemented including a position loop receiving a position reference ($\bar{\theta}$), the method including the step of saturating the position reference so that the operating point corresponding to the derivative ($\bar{\tau}_{sat}$) of the saturated position reference ($\bar{\theta}_{sat}$) and to the current ($i_q$) remains within said operating domain (D').

5. A method according to any one of claims 2 to 4, in which the actuator is powered by an electricity source (20) delivering a power, and in which the reference is multiplied by a coefficient G that is zero if the power is equal to or greater than the maximum authorized power ($P_{max}$).

6. A method according to claim 5, in which the electricity source (20) is arranged to deliver a power supply current (I) at substantially constant voltage (V), and in which the power supply current (I) is measured and compared with a maximum current ($I_{max}$) corresponding to the maximum authorized power ($P_{max}$).

**Patentansprüche**

1. Verfahren zur Steuerung eines elektromechanischen Bremsaktuators (7), der einen Elektromotor umfasst, der dazu geeignet ist, einen Stößel (8) gegenüber einem Stapel von Scheiben zu verschieben, um selektiv eine Bremskraft auf den Stapel von Scheiben auszuüben, wobei sich der Elektromotor bei einem gegebenen Strom ($i_q$) mit einer Drehgeschwindigkeit ($\overline{\Omega}$) dreht,
wobei das Verfahren den Schritt des Betreibens des Aktuators an einem durch die Drehgeschwindigkeit ($\overline{\Omega}$) des Motors und den Strom ($i_q$) definierten Betriebspunkt umfasst, der in einem gegebenen Betriebsbereich (D') der Stromstärke/Geschwindigkeits-Ebene enthalten ist,
**dadurch gekennzeichnet, dass** der Betriebsbereich (D') so ausgewählt wird, dass er eine Grenzlinie (15) aufweist, die einen Abschnitt hat, der sich im Wesentlichen entlang einer Isoleistungskurve (14) erstreckt, die in der Stromstärke/Geschwindigkeits-Ebene verläuft.

2. Verfahren nach Anspruch 1, bei dem eine Regelung durchgeführt wird, die einen Stromregelkreis umfasst, der einen Stromsollwert ($\bar{i}$) empfängt, wobei das Verfahren den Schritt des Sättigens des Stromsollwertes ($\bar{i}_{sat}$) umfasst, derart, dass der Betriebspunkt, der dem gesättigten Stromsollwert ($\bar{i}_{sat}$) und der Drehgeschwindigkeit ($\Omega$) entspricht, in dem genannten Betriebsbereich (D') bleibt.

3. Verfahren nach Anspruch 1, bei dem eine Regelung durchgeführt wird, die einen Geschwindigkeitsregelkreis umfasst, der einen Geschwindigkeitssollwert ($\overline{\Omega}$) empfängt, wobei das Verfahren den Schritt des Sättigens des Geschwindigkeitssollwertes umfasst, derart, dass der Betriebspunkt, der dem gesättigten Geschwindigkeitssollwert ($\overline{\Omega}_{sat}$) und dem Strom ($i_q$) entspricht, in dem genannten Betriebsbereich (D') bleibt.

4. Verfahren nach Anspruch 1, bei dem eine Regelung durchgeführt wird, die einen Positionsregelkreis umfasst, der einen Positionssollwert ($\bar{\theta}$) empfängt, wobei das Verfahren den Schritt des Sättigens des Positionssollwertes umfasst, derart, dass der Betriebspunkt, der der Ableitung ($\bar{\tau}_{sat}$) des gesättigten Positionssollwertes ($\bar{\theta}_{sat}$) und dem Strom ($i_q$) entspricht, in dem genannten Betriebsbereich (D') bleibt.

5. Verfahren nach einem der Ansprüche 2 bis 4, bei dem der Aktuator von einer Stromquelle (20) versorgt wird, wobei der Sollwert mit einem Koeffizienten G multipliziert wird, der gleich Null ist, wenn die Leistung gleich oder über einer zugelassenen Maximalleistung ($P_{max}$) ist.

6. Verfahren nach Anspruch 5, bei dem die Stromquelle (20) derart ausgebildet ist, dass sie einen Versorgungsstrom (I) bei einer im Wesentlichen konstanten Spannung (V) liefert, und bei dem der Versorgungsstrom (I) gemessen und mit einem Maximalstrom ($I_{max}$) verglichen wird, der der zugelassenen Maximalleistung ($P_{max}$) entspricht.

# FIG.1

# FIG.2

ART ANTERIEUR

## FIG.3

## FIG.4

## FIG.5

## FIG.6

## FIG.7

## FIG.9

## FIG.8

## FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005039990 A1